# EUROPEAN PATENT APPLICATION

(11) **EP 4 474 188 A1**
(43) Date of publication of application: **11.12.2024**
(21) Application number: 24732154.0
(22) Date of filing: 24.04.2024
(51) Int. Cl.: B60K 1/04, B62D 21/02

(54) **VEHICLE AND CHASSIS THEREOF**

(30) Priority: 24.04.2023 WO PCT/CN2023/090254; 24.04.2023 WO PCT/CN2023/090261
(71) Applicant: Contemporary Amperex Intelligence Technology (Shanghai) Limited, Shanghai 200120 (CN); Contemporary Amperex Technology Co., Limited, Ningde, Fujian 352100 (CN)
(72) Inventor: HE, Bin, Shanghai 200120 (CN); YU, Zhili, Shanghai 200120 (CN)
(74) Representative: Gong, Jinping
(86) International application number: PCT/CN2024/089476
(87) International publication number: WO 2024/222719

(57) **Abstract**

This application provides a vehicle and a chassis thereof. The vehicle includes an upper vehicle body and a chassis. The chassis includes a lower vehicle body and a plurality of battery cells. The lower vehicle body includes a frame, and the frame has an accommodation cavity. The plurality of battery cells are disposed in the accommodation cavity and are connected to the frame. The frame of the chassis is detachably connected to the upper vehicle body. The battery cells are mounted in the accommodation cavity of the frame, so that the frame of the lower vehicle body can also serve as a battery box. This eliminates some redundant structures of a conventional battery, increases a range of the vehicle, and achieves effects of weight reduction and cost reduction. The upper vehicle body is detachably connected to the chassis. Through disassembly or assembly, the upper vehicle body can be separated and decoupled from or connected to the chassis, to implement separate development of the upper vehicle body and the chassis. In this way, the upper vehicle body and the chassis can be replaced as required, to shorten a research and development cycle and reduce costs.

## Description

### CROSS-REFERENCE TO RELATED APPLICATIONS

This application claims priority to International Patent Application No. PCT/CN2023/090261, filed on April 24, 2023 and entitled "VEHICLE", and International Patent Application No. PCT/CN2023/090254 filed on April 24, 2023 and entitled "LOWER VEHICLE BODY, CHASSIS, AND VEHICLE", which are incorporated herein by reference in their entireties.

### TECHNICAL FIELD

This application relates to the field of vehicle technologies, and more specifically, to a vehicle and a chassis thereof.

### BACKGROUND

Currently, with rapid development of automation and intelligence, new energy vehicles are increasingly popular with and purchased by the public. How to increase an electric range of a vehicle and reduce costs is a research direction of vehicle technologies.

### SUMMARY

This application provides a vehicle and a chassis thereof, to increase an electric range of a vehicle and reduce costs.

According to a first aspect, an embodiment of this application provides a chassis of a vehicle, including a lower vehicle body and a plurality of battery cells. The lower vehicle body includes a frame, and the frame has an accommodation cavity. The plurality of battery cells are disposed in the accommodation cavity and are connected to the frame. The battery cells are mounted in the accommodation cavity of the frame, so that the frame of the lower vehicle body can also serve as a battery box. This eliminates some redundant structures of a conventional battery, increases a range of the vehicle, and achieves effects of weight reduction and cost reduction. The frame can protect the battery cells to reduce a risk of external impact on the battery cells and improve reliability.

In some embodiments, the frame includes a first longitudinal beam and a first transverse beam, the first longitudinal beam extends along a length direction of the vehicle, the first transverse beam extends along a width direction of the vehicle, and the first longitudinal beam is connected to the first transverse beam. The transverse beam and the longitudinal beam of the lower vehicle body serve as a battery box. This can eliminate some redundant structures of a conventional battery, increase a range of the vehicle, and achieve effects of weight reduction and cost reduction.

In some embodiments, the first longitudinal beam is a sill beam of the lower vehicle body.

In some embodiments, the chassis further includes a cover plate, and the cover plate is located on an upper side of the plurality of battery cells and is connected to the first longitudinal beam and the first transverse beam. The cover plate can protect the battery cells from the upper side to reduce impact on the battery cells in the case of trampling by a passenger.

In some embodiments, the cover plate serves as a floor of a passenger compartment of the vehicle. The cover plate can also serve as a floor to reduce the quantity of components of the vehicle, increase a range of the vehicle, and achieve effects of weight reduction and cost reduction.

In some embodiments, the plurality of battery cells are connected to the cover plate. The cover plate can carry the plurality of battery cells.

In some embodiments, the plurality of battery cells are bonded to the cover plate. The battery cells are bonded to the cover plate, so that overall rigidity of the cover plate is improved. This alleviates deformation of the cover plate when the vehicle encounters a collision.

In some embodiments, the chassis further includes a third transverse beam, and the third transverse beam is disposed on an upper side of the cover plate and is connected to the first longitudinal beam. The third transverse beam can improve torsional rigidity of the lower vehicle body. This alleviates deformation of the first longitudinal beam and the cover plate when the vehicle encounters a collision from a side, reduces pressure on the battery cells, and improves reliability.

In some embodiments, the third transverse beam is configured to mount a seat of the vehicle to improve integration of the chassis, reduce the quantity of components, and increase a range of the vehicle.

In some embodiments, the third transverse beam is welded to the cover plate. The third transverse beam is welded to the cover plate to improve integration of the lower vehicle body and simplify a structure of the upper vehicle body.

In some embodiments, the frame includes two first longitudinal beams and two first transverse beams, the two first longitudinal beams are respectively located on two sides of the plurality of battery cells along the width direction, the two first transverse beams are respectively located on two sides of the plurality of battery cells along the length direction, and each first transverse beam is connected to the two first longitudinal beams.

In some embodiments, the frame further includes four torque box assemblies, and each first transverse beam is connected to the two first longitudinal beams through two of the torque box assemblies respectively. The torque box assemblies can implement relative fastening between the first transverse beams and the first longitudinal beams to improve continuity of force transmission between the first transverse beams and the first longitudinal beams.

In some embodiments, the frame further includes a second transverse beam disposed in the accommodation cavity, the second transverse beam and the first transverse beam are spaced apart from each other along the length direction, and the second transverse beam is connected to the first longitudinal beam. The second transverse beam can enhance strength of the frame, to alleviate deformation of the frame and reduce a risk of explosion of the battery cells under pressure when the vehicle is subject to external impact.

In some embodiments, the second transverse beam is provided in plurality, the plurality of second transverse beams are spaced apart from each other along the length direction, and the battery cells are arranged between adjacent second transverse beams. The second transverse beams can protect the battery cells from both sides.

In some embodiments, the frame further includes a protection plate, and the protection plate is located below the plurality of battery cells and covers the accommodation cavity from below. The protection plate is fixedly connected to the first longitudinal beam and the first transverse beam, or the protection plate is detachably connected to the first transverse beam and the first longitudinal beam. The protection plate can seal the accommodation cavity to reduce the quantity of external impurities causing impact to the battery cells and increase cycle life of the battery cells.

In some embodiments, the chassis further includes a front longitudinal beam assembly and a front anti-collision beam, where the front longitudinal beam assembly is fixedly connected to the frame or detachably connected to the frame, and the front anti-collision beam is fixedly connected to the front longitudinal beam assembly or detachably connected to the front longitudinal beam assembly.

In some embodiments, the chassis further includes a rear longitudinal beam assembly and a rear anti-collision beam, where the rear longitudinal beam assembly is fixedly connected to the frame or detachably connected to the frame, and the rear anti-collision beam is fixedly connected to the rear longitudinal beam assembly or detachably connected to the rear longitudinal beam assembly.

According to a second aspect, an embodiment of this application provides a vehicle, including an upper vehicle body and the chassis provided in any embodiment of the first aspect. The frame of the chassis is detachably connected to the upper vehicle body. The upper vehicle body is detachably connected to the chassis. Through disassembly or assembly, the upper vehicle body can be separated and decoupled from or connected to the chassis, to implement separate development of the upper vehicle body and the chassis. In this way, the upper vehicle body and the chassis can be replaced as required, to shorten a research and development cycle and reduce costs.

In some embodiments, the lower vehicle body is configured to be connected to the upper vehicle body after the battery cells are mounted to the frame.

In some embodiments, the vehicle further includes a connector, where the frame is detachably connected to the upper vehicle body through the connector. The upper vehicle body is detachably connected to the chassis through the connector. Through disassembly or assembly of the connector, the upper vehicle body can be separated and decoupled from or connected to the chassis, to implement separate development of the upper vehicle body and the chassis. In this way, the upper vehicle body and the chassis can be replaced as required, to shorten a research and development cycle and reduce costs. One chassis can match upper vehicle bodies of different shapes to meet a user requirement for diverse shapes.

In some embodiments, the connector includes a bolt. The bolt is highly standardized and easy to replace. Bolt connection facilitates disassembly and assembly. This helps improve assembly efficiency of the upper vehicle body and the lower vehicle body.

In some embodiments, one of the upper vehicle body and the frame is provided with at least a through hole, and the other is provided with at least a threaded hole. The bolt passes through the through hole and is in threaded connection to a hole wall of the threaded hole. The through hole and the threaded hole are provided, so that the upper vehicle body can be detachably connected to the frame by using the bolt.

In some embodiments, the bolt extends along a height direction of the vehicle. A mounting direction of the bolt may be the height direction of the vehicle. This can facilitate disassembly and assembly of the bolt.

In some embodiments, the upper vehicle body includes a forearm beam assembly, the lower vehicle body includes a shock tower, and the forearm beam assembly is detachably connected to the shock tower through a connector. The connector connects the forearm beam assembly to the shock tower to improve strength and stability of connection between the upper vehicle body and the lower vehicle body.

In some embodiments, the frame includes a first transverse beam, the upper vehicle body includes a cowl panel assembly, and the cowl panel assembly includes a fourth transverse beam. The first transverse beam is detachably connected to the fourth transverse beam through a connector. The connector connects the first transverse beam to the fourth transverse beam to improve strength and stability of connection between the upper vehicle body and the lower vehicle body.

In some embodiments, the frame includes a first longitudinal beam, the upper vehicle body includes a second longitudinal beam, and the first longitudinal beam is detachably connected to the second longitudinal beam through a connector. The connector connects the first longitudinal beam to the second longitudinal beam to improve strength and stability of connection between the upper vehicle body and the lower vehicle body.

In some embodiments, the first longitudinal beam includes a first body and a first connection portion, where the first connection portion is located on an outer side of the first body, and an upper end of the first body is higher than the first connection portion in the height direction of the vehicle. The second longitudinal beam includes a second body and a second connection portion, where the second connection portion is located on an inner side of the second body, the second body is located on an upper side of the first connection portion, and the second connection portion is located on an upper side of the first body. The second body is detachably connected to the first connection portion, and the second connection portion is detachably connected to the first body. The first longitudinal beam and the second longitudinal beam are connected at positions with different heights to improve strength of connection between the first longitudinal beam and the second longitudinal beam and reduce a risk of relative displacement between the first longitudinal beam and the second longitudinal beam. The first longitudinal beam and the second longitudinal beam overlap along the width direction to implement mutual position limiting and reduce relative displacement between the first longitudinal beam and the second longitudinal beam along the width direction.

In some embodiments, the vehicle further includes a sealing member, where a part of the sealing member is clamped between the second connection portion and the first body.

In some embodiments, the upper vehicle body includes a rear floor assembly, the lower vehicle body includes a fifth transverse beam, and the fifth transverse beam is detachably connected to the rear floor assembly through a connector. The connector connects the fifth transverse beam to the rear floor assembly to improve strength and stability of connection between the upper vehicle body and the lower vehicle body.

In some embodiments, the vehicle further includes a sealing member, and the sealing member is clamped between the upper vehicle body and the frame. The sealing member can implement sealing between the upper vehicle body and the lower vehicle body to reduce the quantity of impurities entering a passenger compartment, improve passenger experience, and improve reliability of the vehicle.

In some embodiments, the sealing member surrounds the passenger compartment of the vehicle. The annular sealing member can increase a sealing area and isolate the passenger compartment from an external environment, to reduce the quantity of external impurities entering the passenger compartment through a gap between the upper vehicle body and the lower vehicle body, improve passenger experience, and improve reliability of the vehicle.

In some embodiments, the frame includes two first longitudinal beams, two first transverse beams, and four torque box assemblies, and each first transverse beam is connected to the two first longitudinal beams through two of the torque box assemblies respectively. The two first transverse beams, the two first longitudinal beams, and the four torque box assemblies j ointly form a first supporting surface. The upper vehicle body includes a fourth transverse beam, a sixth transverse beam, two second longitudinal beams, and four connection plates, and each second longitudinal beam is connected to the fourth transverse beam and the sixth transverse beam through two of the connection plates respectively. The fourth transverse beam, the sixth transverse beam, the two second longitudinal beams, and the four connection plates jointly form a second supporting surface. The sealing member is clamped between the first supporting surface and the second supporting surface. The first supporting surface and the second supporting surface can provide stable support for the sealing member to improve air tightness and water tightness of the passenger compartment.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following descriptions show merely some embodiments of this application, and persons of ordinary skill in the art may still derive other drawings from the accompanying drawings without creative efforts.
FIG. 1 is a schematic exploded view of a vehicle according to some embodiments of this application;
FIG. 2 is a schematic partial cross-sectional view of the vehicle shown in FIG. 1;
FIG. 3 is a schematic structural diagram of a lower vehicle body of a vehicle according to some embodiments of this application;
FIG. 4 is a schematic enlarged view at a circle A in FIG. 3;
FIG. 5 is a schematic partial bottom view of a lower vehicle body of a vehicle according to some embodiments of this application;
FIG. 6 is a schematic partial cross-sectional view of a vehicle according to some embodiments of this application;
FIG. 7 is another schematic partial cross-sectional view of a vehicle according to some embodiments of this application;
FIG. 8 is a schematic structural diagram of an upper vehicle body of a vehicle according to some embodiments of this application;
FIG. 9 is a schematic partial structural diagram of an upper vehicle body of a vehicle according to some embodiments of this application;
FIG. 10 is a schematic partial cross-sectional view of a vehicle according to some embodiments of this application;
FIG. 11 is another schematic partial cross-sectional view of a vehicle according to some embodiments of this application;
FIG. 12 is still another schematic partial cross-sectional view of a vehicle according to some embodiments of this application;
FIG. 13 is yet another schematic partial cross-sectional view of a vehicle according to some embodiments of this application; and
FIG. 14 is still yet another schematic partial cross-sectional view of a vehicle according to some embodiments of this application.

The accompanying drawings are not drawn to scale.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the embodiments described are some rather than all embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application belongs. The terms used in the specification of this application are merely intended to describe the specific embodiments rather than to limit this application. The terms "include", "comprise", and any variations thereof in the specification and claims of this application as well as the foregoing description of the drawings are intended to cover non-exclusive inclusions. In the specification, claims, or accompanying drawings of this application, the terms "first", "second", and the like are intended to distinguish between different objects rather than to describe a particular order or a primary-secondary relationship.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection; and may refer to a direct connection, an indirect connection via an intermediate medium, or an internal communication between two elements. Persons of ordinary skills in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In the embodiments of this application, the same reference signs denote the same components. For brevity, in different embodiments, detailed descriptions of the same components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, "a plurality of means more than two (inclusive).

In the related art, a plurality of battery cells are pre-mounted in a box to form a battery pack, and then the battery pack is mounted in a vehicle body. However, the box occupies a weight and space of the vehicle and affects a range of the vehicle.

In view of this, the embodiments of this application provide a technical solution in which a battery cell is directly integrated into a chassis to eliminate a conventional battery box. This increases a battery capacity and increases an electric range of a vehicle.

The technical solution described in the embodiments of this application is applicable to a vehicle. The vehicle may be a fossil fuel vehicle, a natural-gas vehicle, or a new energy vehicle. The new energy vehicle may be a battery electric vehicle, a hybrid electric vehicle, a rangeextended vehicle, or the like.

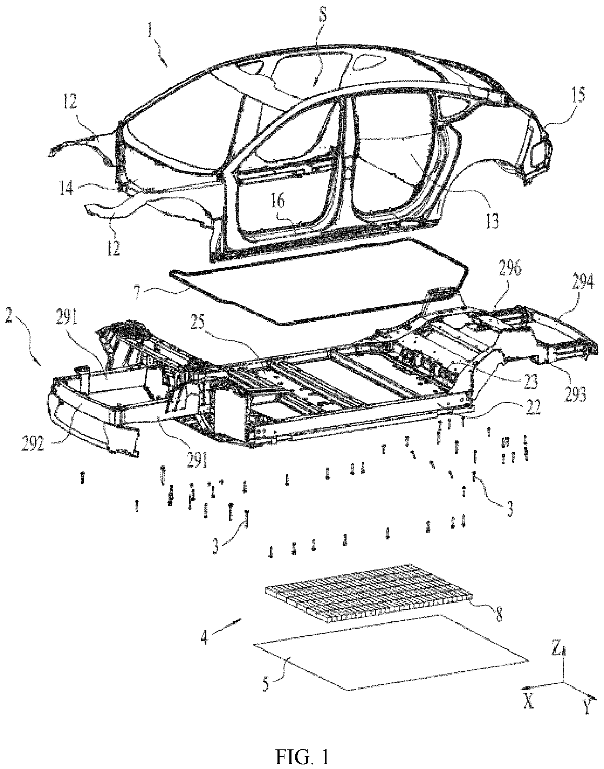

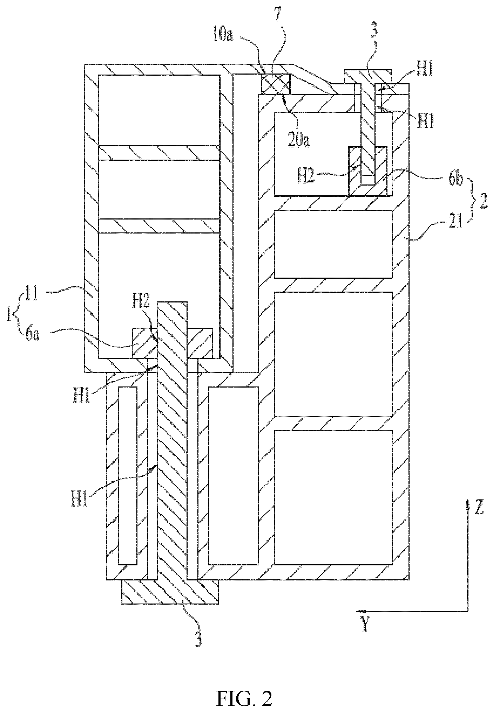

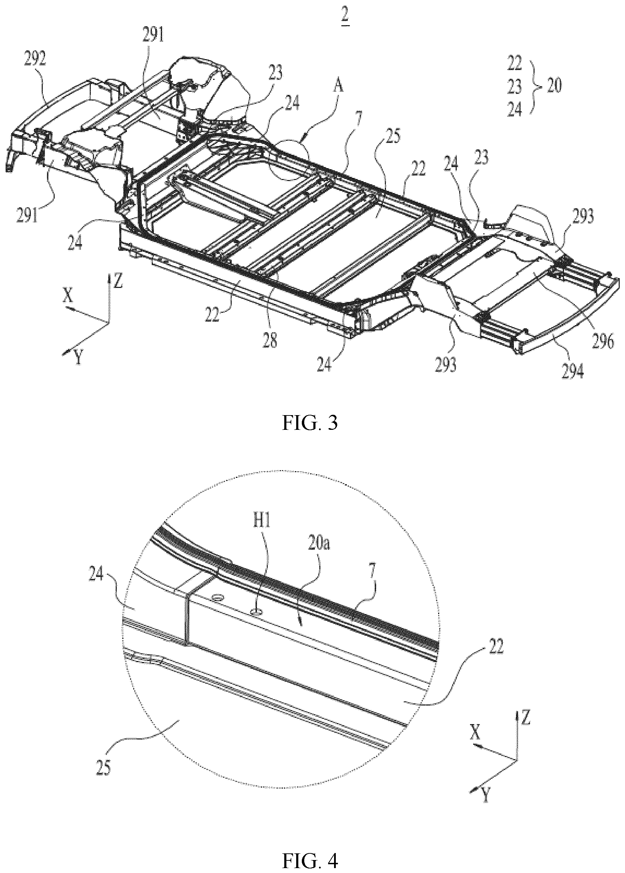

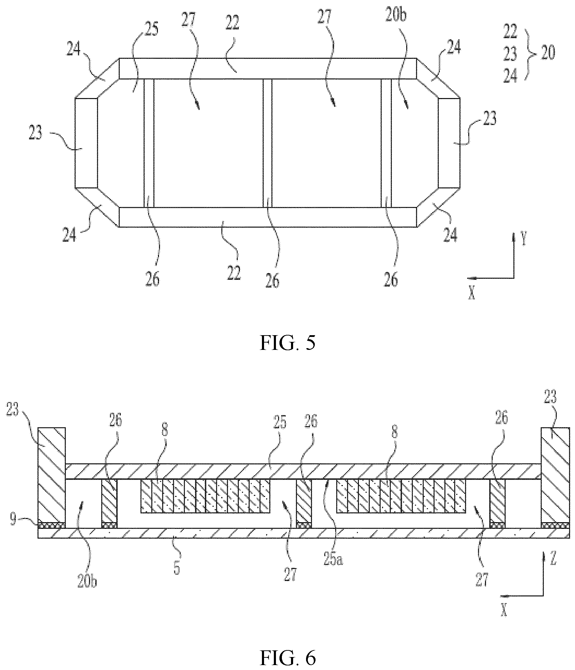

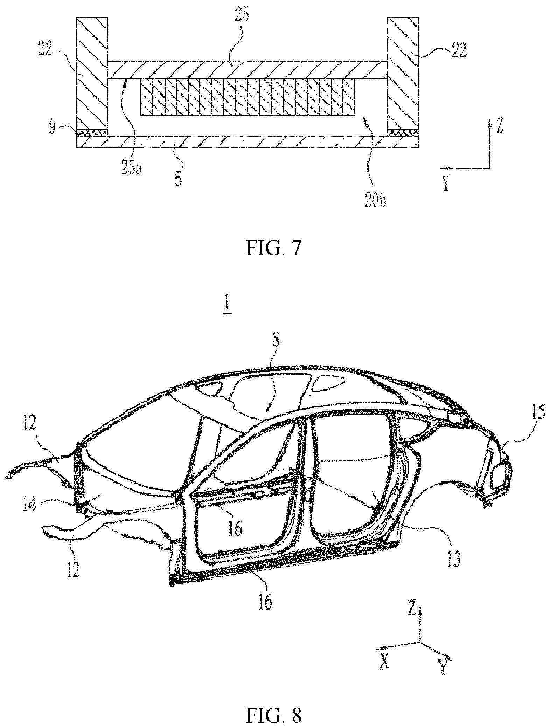

FIG. 1 is a schematic exploded view of a vehicle according to some embodiments of this application. FIG. 2 is a schematic partial cross-sectional view of the vehicle shown in FIG. 1. FIG. 3 is a schematic structural diagram of a lower vehicle body of a vehicle according to some embodiments of this application. FIG. 4 is a schematic enlarged view at a circle A in FIG. 3. FIG. 5 is a schematic partial bottom view of a lower vehicle body of a vehicle according to some embodiments of this application. FIG. 6 is a schematic partial cross-sectional view of a vehicle according to some embodiments of this application. FIG. 7 is another schematic partial cross-sectional view of a vehicle according to some embodiments of this application.

As shown in FIG. 1 to FIG. 7, an embodiment of this application provides a vehicle, including an upper vehicle body 1 and a chassis 4.

In some embodiments, the chassis 4 includes a lower vehicle body 2 and a plurality of battery cells 8. The battery cells 8 are connected to the lower vehicle body 2.

In some embodiments, the lower vehicle body 2 includes a frame 20, and the frame 20 has an accommodation cavity 20b. The plurality of battery cells 8 are disposed in the accommodation cavity 20b and are connected to the frame 20.

The battery cell 8 may be a smallest unit capable of independently implementing charging and discharging. The battery cell 8 may include a lithium-ion secondary battery cell, a lithium-sulfur battery cell, a sodium-lithium-ion battery cell, a sodium-ion battery cell, a magnesium-ion battery cell, or the like. This is not limited in the embodiments of this application. The battery cell 8 may be cylindrical, flat, rectangular, or in another shape. This is not limited in the embodiments of this application either. The battery cell 8 may be a cylindrical battery cell, a prismatic battery cell, or a pouch battery cell.

The battery cells 8 are mounted in the accommodation cavity 20b of the frame 20, so that the frame 20 of the lower vehicle body 2 can also serve as a battery box. This eliminates some redundant structures of a conventional battery, increases a range of the vehicle, and achieves effects of weight reduction and cost reduction. The frame 20 can protect the battery cells 8 to reduce a risk of external impact on the battery cells 8 and improve reliability.

In some embodiments, the chassis 4 may further include a drive system and a chassis system. The chassis system includes a transmission system, a traveling system, a steering system, and a braking system. The drive system may include a motor.

In the embodiments of this application, the battery cells 8 are integrated into the chassis 4 to implement CTC (Cell to Chassis) cell-to-chassis integration.

In the embodiments of this application, a battery system, the drive system, and the chassis system are integrated together to reduce the quantity of components and save space. This improves structural efficiency, greatly reduces a vehicle weight, and increases battery life.

In the embodiments of this application, the chassis 4 has high adaptability, and a degree of matching with the entire vehicle is improved, so that rapid and flexible batch production can be performed. The chassis 4 is highly integrated and modularized, and can adapt to all levels and all types of vehicles across platforms in the future. In addition, because of the high integration and modularization, the quantity of components is further reduced, and production steps are further simplified. This increases battery capacity and battery life while reducing costs.

The independent lower vehicle body 2 is disposed, so that the complete chassis system, battery system, and drive system can be integrated into the lower vehicle body 2. In this way, the entire chassis 4 can be designed and operated independently of the upper vehicle body 1, so that a drive part of the entire vehicle can be developed and assembled independently of a passenger compartment S.

In some embodiments, the frame 20 includes a first longitudinal beam 22 and a first transverse beam 23, the first longitudinal beam 22 extends along a length direction X of the vehicle, the first transverse beam 23 extends along a width direction Y of the vehicle, and the first longitudinal beam 22 is connected to the first transverse beam 23. Optionally, the length direction X, the width direction Y, and a height direction Z are perpendicular to each other. For example, the length direction X is parallel to an arrangement direction of the front and the rear of the vehicle.

The first longitudinal beam 22 may be directly connected to the first transverse beam 23, or may be indirectly connected to the first transverse beam 23 through another component.

The transverse beam and the longitudinal beam of the lower vehicle body 2 serve as a battery box. This can eliminate some redundant structures of a conventional battery, increase a range of the vehicle, and achieve effects of weight reduction and cost reduction.

In some embodiments, the first longitudinal beam 22 is a sill beam of the lower vehicle body 2.

In some embodiments, the frame 20 includes two first longitudinal beams 22 and two first transverse beams 23, the two first longitudinal beams 22 are respectively located on two sides of the plurality of battery cells 8 along the width direction Y, the two first transverse beams 23 are respectively located on two sides of the plurality of battery cells 8 along the length direction X, and each first transverse beam 23 is connected to the two first longitudinal beams 22.

For example, the two first longitudinal beams 22 are spaced apart from each other along the width direction Y of the vehicle, and two first transverse beams 23 are spaced apart from each other along the length direction X of the vehicle. The first longitudinal beam 22 is connected to the two first transverse beams 23.

In some embodiments, the frame 20 further includes four torque box assemblies 24, and each first transverse beam 23 is connected to the two first longitudinal beams 22 through two of the torque box assemblies 24 respectively.

The torque box assemblies 24 can implement relative fastening between the first transverse beams 23 and the first longitudinal beams 22 to improve continuity of force transmission between the first transverse beams 23 and the first longitudinal beams 22.

In some embodiments, the torque box assembly 24 may include a torque box and other connection components such as standard components disposed in the torque box.

In some embodiments, two of the torque box assemblies 24 near the front of the vehicle may be referred to as front torque box assemblies, and two of the torque box assemblies 24 near the rear of the vehicle may be referred to as rear torque box assemblies.

In some embodiments, the chassis 4 further includes a cover plate 25, and the cover plate 25 is located on an upper side of the plurality of battery cells 8 and is connected to the first longitudinal beam 22 and the first transverse beam 23.

The cover plate 25 can protect the battery cells 8 from the upper side to reduce impact on the battery cells 8 in the case of trampling by a passenger.

In some embodiments, the cover plate 25 is connected between the two first longitudinal beams 22.

In some embodiments, the cover plate 25 serves as a floor of the passenger compartment of the vehicle. The cover plate 25 can also serve as a floor to reduce the quantity of components of the vehicle, increase a range of the vehicle, and achieve effects of weight reduction and cost reduction.

In some embodiments, the plurality of battery cells 8 are connected to the cover plate 25. The cover plate 25 can carry the plurality of battery cells 8.

In some embodiments, the plurality of battery cells 8 are bonded to the cover plate 25. The battery cells 8 are bonded to the cover plate 25, so that overall rigidity of the cover plate 25 is improved. This alleviates deformation of the cover plate 25 when the vehicle encounters a collision.

In some embodiments, the cover plate 25 is further connected between the two first transverse beams 23.

In some embodiments, the frame 20 further includes a second transverse beam 26 disposed in the accommodation cavity 20b, the second transverse beam 26 and the first transverse beam 23 are spaced apart from each other along the length direction X, and the second transverse beam 26 is connected to the first longitudinal beam 22.

The second transverse beams 26 may be provided in one or plurality.

The second transverse beam 26 can enhance strength of the frame 20, to alleviate deformation of the frame 20 and reduce a risk of explosion of the battery cells under pressure when the vehicle is subject to external impact.

In some embodiments, the chassis 4 includes a plurality of second transverse beams 26, and the plurality of second transverse beams 26 are spaced apart from each other along the length direction X. The battery cell 8 is arranged between adjacent second transverse beams 26.

The second transverse beams 26 can protect the battery cells 8 from both sides.

In some embodiments, each second transverse beam 26 is connected to the two first longitudinal beams 22.

In some embodiments, the first longitudinal beam 22 and the second transverse beam 26 protrude from a lower surface 25a of the cover plate 25.

In some embodiments, at least two second transverse beams 26, the two first longitudinal beams 22, and the cover plate 25 enclose an accommodation compartment 27 with an opening, where the opening faces the cover plate 25, and the plurality of battery cells 8 are accommodated in the accommodation compartment 27.

The accommodation compartments 27 may be provided in one or plurality.

The first longitudinal beam 22 and the second transverse beam 26 form a frame structure surrounding the battery cells 8. The frame structure can protect the battery cells 8 to reduce a risk of external impact on the battery cells 8 and improve reliability.

In some embodiments, three second transverse beams 26 are provided. The accommodation cavity includes two accommodation compartments 27.

The three second transverse beams 26, the two first longitudinal beams 22, and the cover plate 25 may enclose the two accommodation compartments 27.

The three second transverse beams 26 can improve overall strength of the lower vehicle body 2. This alleviates deformation of the first longitudinal beam 22 when the vehicle encounters a collision from a side, reduces pressure on the battery cells 8, and improves reliability.

In some embodiments, the first longitudinal beam 22 may be connected to the second transverse beam 26 through CMT (Cold Metal Transfer) welding, flow drill screw (FDS) riveting, self-piercing riveting (SPR), or the like.

In some embodiments, the frame 20 further includes a protection plate 5, and the protection plate 5 is located below the plurality of battery cells 8 and covers the accommodation cavity 20b from below. The protection plate 5 can seal the accommodation cavity 20b to reduce the quantity of external impurities causing impact to the battery cells 8 and increase cycle life of the battery cells.

In some embodiments, the protection plate 5 is fixedly connected to the first longitudinal beam 22.

In some embodiments, the protection plate 5 is detachably connected to the first longitudinal beam 22, to facilitate maintenance of the battery cells 8. For example, the protection plate 5 may be connected to the first longitudinal beam 22 by using a bolt.

In some embodiments, the protection plate 5 is fixedly connected to the first transverse beam 23.

In some embodiments, the protection plate 5 is detachably connected to the first transverse beam 23, to facilitate maintenance of the battery cells 8. For example, the protection plate 5 may be connected to the first transverse beam 23 by using a bolt.

In some embodiments, a sealing pad 9 is disposed between the protection plate 5 and the first longitudinal beam 22. Optionally, the sealing pad 9 may be foam. Alternatively, a sealant may be applied between the protection plate 5 and the first longitudinal beam 22.

In some embodiments, the protection plate 5 is connected to the second transverse beam 26. Optionally, the protection plate 5 is connected to the second transverse beam 26 by using a bolt.

In some alternative embodiments, the second transverse beam 26 may alternatively be omitted, and the first transverse beam 23, the first longitudinal beam 22, and the cover plate 25 may be used to enclose an accommodation compartment 27. The accommodation cavity includes the accommodation compartment 27.

In some embodiments, the chassis 4 further includes a third transverse beam 28, and the third transverse beam 28 is disposed on an upper side of the cover plate 25 and is connected to the first longitudinal beam 22.

The third transverse beam 28 can improve torsional rigidity of the lower vehicle body 2. This alleviates deformation of the first longitudinal beam 22 and the cover plate 25 when the vehicle encounters a collision from a side, reduces pressure on the battery cells 8, and improves reliability.

In some embodiments, the third transverse beam 28 is configured to mount a seat of the vehicle to improve integration of the chassis, reduce the quantity of components, and increase a range of the vehicle.

In some embodiments, the third transverse beam 28 is welded to the cover plate 25. The third transverse beam 28 is welded to the cover plate 25 to improve integration of the lower vehicle body 2 and simplify a structure of the upper vehicle body 1.

In some embodiments, two ends of the third transverse beam 28 are respectively connected to the two first longitudinal beams 22.

In some embodiments, the lower vehicle body 2 includes a front longitudinal beam assembly 291. The front longitudinal beam assembly 291 may be used for mounting a front suspension of the chassis 4. For example, the front longitudinal beam assembly 291 may include a front longitudinal beam, a reinforcing plate, a standard component, and other components. The reinforcing plate and the standard component may be disposed on the front longitudinal beam. Optionally, the standard component may include a bolt or a stud.

The front longitudinal beam can collapse and absorb energy when a serious collision accident occurs, to ensure safety of a passenger in the vehicle.

In some embodiments, the front longitudinal beam assembly 291 is fixedly connected to the frame 20.

In some embodiments, the front longitudinal beam assembly 291 is detachably connected to the frame 20. The front longitudinal beam assembly 291 may be assembled independently of the frame 20. The front longitudinal beam assembly 291 may be connected to the frame 20 after the battery cells 8 are mounted to the frame 20. Optionally, the front longitudinal beam assembly 291 is connected to the frame 20 by using a bolt.

In some embodiments, the front longitudinal beam assembly 291 may be connected to the front torque box assembly.

In some embodiments, two front longitudinal beam assemblies 291 are provided, and the two front longitudinal beam assemblies 291 are respectively connected to the two front torque box assemblies.

In some embodiments, the lower vehicle body 2 further includes a front anti-collision beam 292, and the front anti-collision beam 292 is fixedly connected to the front longitudinal beam assembly 291.

In some embodiments, the front anti-collision beam 292 may be detachably or nondetachably connected to the front longitudinal beam assembly 291.

In some embodiments, the front anti-collision beam 292 is detachably connected to the front longitudinal beam assembly 291. Optionally, the front anti-collision beam 292 is connected to the front longitudinal beam assembly 291 by using a bolt. The front anti-collision beam 292 may be assembled independently of other structures of the lower vehicle body 2.

In some embodiments, the lower vehicle body 2 further includes a rear longitudinal beam assembly 293. The rear longitudinal beam assembly 293 may be used for mounting a rear suspension of the chassis 4.

In some embodiments, the rear longitudinal beam assembly 293 may include a rear longitudinal beam and a connection component, for example, a standard component, disposed on the rear longitudinal beam.

The rear longitudinal beam can collapse and absorb energy when a serious collision accident occurs, to ensure safety of a passenger in the vehicle.

In some embodiments, the rear longitudinal beam assembly 293 is fixedly connected to the frame 20.

In some embodiments, the rear longitudinal beam assembly 293 is detachably connected to the frame 20. The rear longitudinal beam assembly 293 may be assembled independently of the frame 20. The rear longitudinal beam assembly 293 may be connected to the frame 20 after the battery cells 8 are mounted to the frame 20. Optionally, the rear longitudinal beam assembly 293 is connected to the frame 20 by using a bolt.

In some embodiments, the rear longitudinal beam assembly 293 may be connected to the rear torque box assembly.

In some embodiments, two rear longitudinal beam assemblies 293 are provided, and the two rear longitudinal beam assemblies 293 are respectively connected to the two rear torque box assemblies.

In some embodiments, the lower vehicle body 2 further includes a rear anti-collision beam 294, and the rear anti-collision beam 294 is connected to the rear longitudinal beam assembly 293. Optionally, the rear anti-collision beam 294 is fixedly connected to the rear longitudinal beam assembly 293.

In some embodiments, the rear anti-collision beam 294 is detachably connected to the rear longitudinal beam assembly 293. For example, the rear anti-collision beam 294 is connected to the rear longitudinal beam assembly 293 by using a bolt. The rear anti-collision beam 294 may be assembled independently of other structures of the lower vehicle body 2.

In some embodiments, the frame 20 is detachably connected to the upper vehicle body 1. The upper vehicle body 1 is detachably connected to the chassis 4. Through disassembly or assembly, the upper vehicle body 1 can be separated and decoupled from or connected to the chassis 4, to implement separate development of the upper vehicle body 1 and the chassis 4. In this way, the upper vehicle body 1 and the chassis 4 can be replaced as required, to shorten a research and development cycle and reduce costs.

In some embodiments, the lower vehicle body 2 is configured to be connected to the upper vehicle body 1 after the battery cells 8 are mounted to the frame 20.

In some embodiments, the vehicle further includes a connector 3, where the frame 20 is detachably connected to the upper vehicle body 1 through the connector 3.

A type of the connector 3 may be flexibly selected. In some examples, the connector 3 may include a fastener. Optionally, the fastener may include at least one of a bolt, a nut, a stud, a screw, and a pin. In some other examples, the connector 3 may include a clamp.

The connectors 3 may be provided in one or plurality.

In some examples, the connector 3 is provided in plurality. The plurality of connectors 3 may be a same type of components. For example, the plurality of connectors 3 are bolts. Alternatively, the plurality of connectors 3 may be a plurality of types of components. For example, some connectors 3 are bolts, and some connectors 3 are screws.

The connector 3 is disposed to split the upper vehicle body 1 and the chassis 4 into two independent assemblies. For example, the upper vehicle body 1 and the lower vehicle body 2 are two independent assemblies.

In the embodiments of this application, the upper vehicle body 1 is detachably connected to the chassis 4 through the connector 3. Through disassembly or assembly of the connector 3, the upper vehicle body 1 can be separated and decoupled from or connected to the chassis 4, to implement separate development of the upper vehicle body 1 and the chassis 4. In this way, the upper vehicle body 1 and the chassis 4 can be replaced as required, to shorten a research and development cycle and reduce costs.

One chassis 4 can match upper vehicle bodies 1 of different shapes to meet a user requirement for diverse shapes.

In some embodiments, the upper vehicle body 1 is detachably connected to the lower vehicle body 2 through the connector 3. The upper vehicle body 1 is detachably connected to the lower vehicle body 2 through the connector 3. Through disassembly or assembly of the connector 3, the upper vehicle body 1 can be separated and decoupled from or connected to the lower vehicle body 2, to implement separate development of the upper vehicle body 1 and the lower vehicle body 2. In this way, the upper vehicle body 1 and the lower vehicle body 2 can be replaced as required, to shorten a research and development cycle and reduce costs. One lower vehicle body 2 can match upper vehicle bodies 1 of different shapes to meet a user requirement for diverse shapes.

In some embodiments, the connector 3 may be provided in plurality. Positions of the plurality of connectors 3 may be set according to requirements of the upper vehicle body 1 and the chassis 4 for connection strength. Optionally, positions of the plurality of connectors 3 may be set according to requirements of the upper vehicle body 1 and the lower vehicle body 2 for connection strength.

In some embodiments, the connector 3 includes a bolt.

For example, the connector 3 is provided in plurality, and at least some of the connectors 3 are bolts.

The bolt may be in threaded connection to the upper vehicle body 1, or may be in threaded connection to the lower vehicle body 2 of the chassis 4.

The bolt is highly standardized and easy to replace. Bolt connection facilitates disassembly and assembly. This helps improve assembly efficiency of the upper vehicle body 1 and the lower vehicle body 2.

Compared with a case in which the upper vehicle body 1 is connected to the chassis 4 through welding, flow drill screw (FDS) riveting, self-piercing riveting (SPR), bonding, or the like, in a case in which the upper vehicle body 1 is connected to the chassis 4 by using the bolt, a physical structure of the upper vehicle body 1 is decoupled from a physical structure of the lower vehicle body 2.

In some embodiments, one of the upper vehicle body 1 and the lower vehicle body 2 is provided with at least a through hole H1, and the other is provided with at least a threaded hole H2. The bolt passes through the through hole H1 and is in threaded connection to a hole wall of the threaded hole H2. The through hole H1 and the threaded hole H2 are provided, so that the upper vehicle body 1 can be detachably connected to the lower vehicle body 2 by using the bolt.

In some embodiments, one of the upper vehicle body 1 and the frame 20 is provided with at least a through hole H1, and the other is provided with at least a threaded hole H2. The bolt passes through the through hole H1 and is in threaded connection to a hole wall of the threaded hole H2.

In some examples, the upper vehicle body 1 is provided with a through hole H1, and the frame 20 is provided with a threaded hole H2. In some other examples, the frame 20 is provided with a through hole H1, and the upper vehicle body 1 is provided with a threaded hole H2. In still some other examples, the upper vehicle body 1 is provided with a through hole H1 and a threaded hole H2, and the frame 20 is also provided with a threaded hole H2 and a through hole h1. Optionally, some bolts pass through the through hole H1 of the upper vehicle body 1 and are in threaded connection to a hole wall of the threaded hole H2 of the frame 20, and some other bolts pass through the through hole H1 of the frame 20 and are in threaded connection to a hole wall of the threaded hole H2 of the upper vehicle body 1.

The through hole H1 and the threaded hole H2 are provided, so that the upper vehicle body 1 can be detachably connected to the frame 20 by using the bolt.

In some embodiments, the bolt extends along the height direction Z of the vehicle.

The height direction Z of the vehicle may be a height direction Z of the vehicle in a traveling state.

For example, a center axis of the bolt, a center axis of the through hole H1, and a center axis of the threaded hole H2 may all be parallel to the height direction Z.

A mounting direction of the bolt may be the height direction Z of the vehicle. This can facilitate disassembly and assembly of the bolt.

In some embodiments, the upper vehicle body 1 is provided with a nut 6a, and the nut 6a is provided with a threaded hole H2 and is used for threaded connection to a bolt. Optionally, the nut 6a may include a hexagonal flange nut.

For example, the upper vehicle body 1 may include an upper vehicle body sheet metal part 11 and the nut 6a, and the nut 6a may be welded to the upper vehicle body sheet metal part 11.

In some embodiments, the lower vehicle body 2 is provided with a nut 6b. The nut 6b is provided with a threaded hole H2 and is used for threaded connection to a bolt. Optionally, the nut 6b may include a hexagonal flange nut.

For example, the lower vehicle body 2 may include a lower vehicle body sheet metal part 21 and the nut 6b, and the nut 6b may be welded to the lower vehicle body sheet metal part 21.

In some embodiments, the vehicle further includes a sealing member 7, and the sealing member 7 is clamped between the upper vehicle body 1 and the lower vehicle body 2.

The sealing member 7 may implement sealing in a plurality of manners. For example, the sealing member 7 may implement sealing through compression and deformation. Alternatively, the sealing member 7 may implement sealing through bonding or the like.

The sealing member 7 may be made of a plurality of materials. For example, the sealing member 7 may be made of an elastically compressible material, for example, rubber or foam. Alternatively, the sealing member 7 may be obtained by solidifying a colloid.

The sealing member 7 can implement sealing between the upper vehicle body 1 and the lower vehicle body 2 to reduce the quantity of impurities entering the passenger compartment S, improve passenger experience, and improve reliability of the vehicle.

In some embodiments, the vehicle includes a sealing member 7, and the sealing member 7 is clamped between the upper vehicle body 1 and the frame 20.

In some embodiments, the sealing member 7 may have advantages of dust prevention, water tightness, sound insulation, wear resistance, ease of maintenance, and the like.

In some embodiments, the sealing member 7 surrounds the passenger compartment S of the vehicle.

The passenger compartment S may be space that is enclosed by the upper vehicle body 1 and the lower vehicle body 2 and that is used for accommodating a passenger. For example, a seat, an armrest, and other components may be arranged in the passenger compartment S.

The annular sealing member 7 can increase a sealing area and isolate the passenger compartment S from an external environment, to reduce the quantity of external impurities entering the passenger compartment S through a gap between the upper vehicle body 1 and the lower vehicle body 2, improve passenger experience, and improve reliability of the vehicle.

In some embodiments, the sealing member 7 is bonded to the lower vehicle body 2.

In some examples, adhesive may be applied to the lower vehicle body 2, and then the sealing member 7 is bonded to the lower vehicle body 2. In an alternative example, the sealing member 7 may include adhesive, and may be directly bonded to the lower vehicle body 2.

In the embodiments of this application, during disassembly and assembly of the upper vehicle body 1 and the lower vehicle body 2, a displacement of the sealing member 7 is reduced, misalignment of the sealing member 7 is reduced, and assembly efficiency is improved. In addition, the sealing member 7 is bonded to the lower vehicle body 2, so that sealing performance can be improved.

In some embodiments, a material of the sealing member 7 includes ethylene propylene diene monomer EPDM (Ethylene Propylene Diene Monomer).

Ethylene propylene diene monomer has strong resilience and good sealing performance.

In some embodiments, the lower vehicle body 2 is configured to be connected to the upper vehicle body 1 after the battery cells 8 are mounted to the frame 20.

The battery cells 8 are mounted to the lower vehicle body 2 before the upper vehicle body 1 and the lower vehicle body 2 are assembled. Therefore, if sealing is implemented through welding, adhesive baking, or the like during connection between the upper vehicle body 1 and the lower vehicle body 2, the battery cells 8 are likely to be damaged. In the embodiments of this application, the sealing member 7 is used for sealing, so that a risk of damage to the battery cells 8 can be reduced during assembly of the upper vehicle body 1 and the lower vehicle body 2.

In some embodiments, the vehicle further includes a vehicle interior, a human-computer interaction system, and an entertainment system that are mounted on the upper vehicle body 1. In the embodiments of this application, the vehicle interior, the human-computer interaction system, and the entertainment system can be developed independently of the chassis 4.

In some embodiments, each first longitudinal beam 22 is detachably connected to the upper vehicle body 1 through at least one connector 3.

The two first longitudinal beams 22 have high strength. The first longitudinal beams 22 are connected to the upper vehicle body 1, so that strength and stability of connection between the upper vehicle body 1 and the lower vehicle body 2 can be improved.

In some embodiments, the first transverse beam 23 is detachably connected to the upper vehicle body 1 through at least one connector 3.

In some embodiments, the first transverse beam 23 and the first longitudinal beam 22 are connected to the upper vehicle body 1, so that strength and stability of connection between the upper vehicle body 1 and the lower vehicle body 2 can be improved.

In some embodiments, the torque box assembly 24 is detachably connected to the upper vehicle body 1 through at least one connector 3.

The torque box assembly 24 is connected to the upper vehicle body 1, so that strength and stability of connection between the upper vehicle body 1 and the lower vehicle body 2 can be further improved.

In some embodiments, the two first transverse beams 23, the two first longitudinal beams 22, and the four torque box assemblies 24 jointly form a first supporting surface 20a. The vehicle further includes a sealing member 7, and the sealing member 7 is clamped between the upper vehicle body 1 and the first supporting surface 20a.

The first supporting surface 20a can provide stable support for the sealing member 7 to improve air tightness and water tightness of the passenger compartment S.

In some embodiments, the upper vehicle body 1 includes a second supporting surface 10a, and the sealing member 7 is clamped between the second supporting surface 10a and the first supporting surface 20a.

In some embodiments, a shape of the first supporting surface 20a matches a shape of the second supporting surface 10a.

In some embodiments, the plurality of battery cells 8 are disposed on a side, facing away from the upper vehicle body 1, of the cover plate 25, and are connected to the cover plate 25.

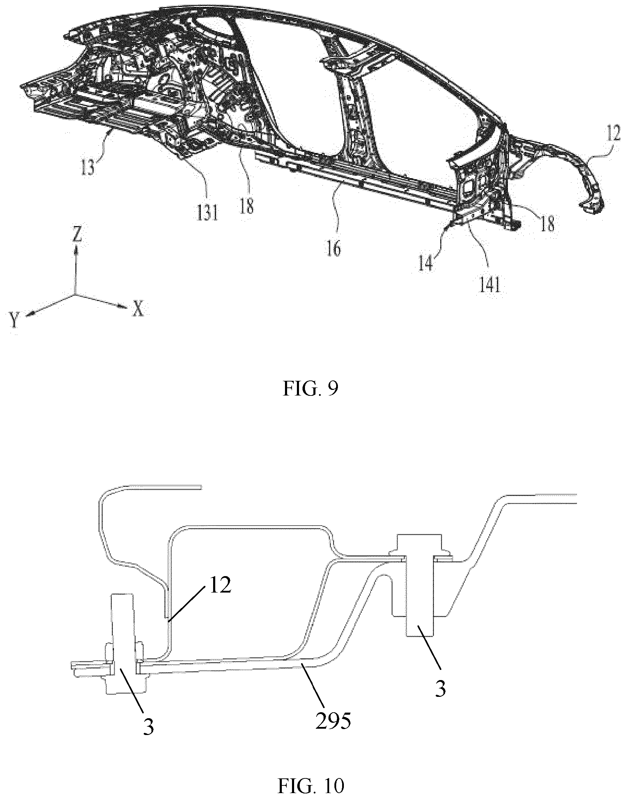

FIG. 8 is a schematic structural diagram of an upper vehicle body of a vehicle according to some embodiments of this application. FIG. 9 is a schematic partial structural diagram of an upper vehicle body of a vehicle according to some embodiments of this application.

As shown in FIG. 8 and FIG. 9, in some embodiments, the upper vehicle body 1 includes at least one of a forearm beam assembly 12, a rear floor assembly 13, and a cowl panel assembly 14.

In a conventional vehicle, the forearm beam assembly 12, the rear floor assembly 13, and the cowl panel assembly 14 are usually integrated into a lower vehicle body. In the embodiments of this application, components originally disposed in the lower vehicle body may be integrated into the upper vehicle body 1, to simplify a structure of the lower vehicle body 2 and facilitate mounting of structures such as a battery system and a drive system in the lower vehicle body 2.

In some embodiments, the forearm beam assembly 12 may include a forearm beam, a bracket, and other components (for example, standard components) that are integrated into the forearm beam. The forearm beam can provide support for some components, such as lamps, of the vehicle.

In some embodiments, the rear floor assembly 13 includes a rear floor, a seat mounting structure disposed on the rear floor, a standard component disposed on the rear floor, and other components disposed on the rear floor. The rear floor can carry a seat or other components.

In some embodiments, the cowl panel assembly 14 includes a cowl panel and other components (for example, a standard component and a bracket) mounted on the cowl panel. The cowl panel may be an important barrier for isolating an engine compartment from a cab. It can not only absorb and transmit energy upon a collision to provide sufficient rigidity for a vehicle body frame, but also affect sealing performance of the entire vehicle.

In some embodiments, the upper vehicle body 1 includes the forearm beam assembly 12, the rear floor assembly 13, and the cowl panel assembly 14. In the embodiments of this application, main components, such as the forearm beam assembly 12, the rear floor assembly 13, and the cowl panel assembly 14, that are originally disposed in the lower vehicle body 2 are integrated into the upper vehicle body 1.

In some embodiments, the rear floor assembly 13 includes a rear floor. The cover plate 25 is closer to the front of the vehicle relative to the rear floor.

In some embodiments, the forearm beam assembly 12 is disposed at a front end, near the front of the vehicle, of the upper vehicle body 1.

In some embodiments, the upper vehicle body 1 further includes a tailgate assembly 15. The cowl panel assembly 14 is located on a side, near the front of the vehicle, of the tailgate assembly 15.

In some embodiments, the tailgate assembly 15 includes a tailgate and other components (for example, a standard component, a bracket, and a lock) disposed on the tailgate. The tailgate is an automobile cover, and the tailgate is a rear panel of an automobile trunk and one of main force-bearing mechanical parts at the rear of the automobile.

As shown in FIG. 2 to FIG. 9, in some embodiments, the upper vehicle body 1 includes a rear floor assembly 13, a cowl panel assembly 14, and two second longitudinal beams 16, and each second longitudinal beam 16 is connected to the rear floor assembly 13 and the cowl panel assembly 14. The rear floor assembly 13, the cowl panel assembly 14, and the two second longitudinal beams 16 jointly form a second supporting surface 10a.

In some embodiments, the cowl panel assembly 14 includes a fourth transverse beam 141, and the rear floor assembly 13 includes a sixth transverse beam 131. For example, one first transverse beam 23 is detachably connected to the fourth transverse beam 141 through a connector 3, and the other first transverse beam 23 is detachably connected to the fourth transverse beam 141 through a connector 3.

In some embodiments, the upper vehicle body 1 includes a fourth transverse beam 141, a sixth transverse beam 131, two second longitudinal beams 16, and four connection plates 18, and each second longitudinal beam 16 is connected to the fourth transverse beam 141 and the sixth transverse beam 131 through two of the connection plates 18 respectively. The fourth transverse beam 141, the sixth transverse beam 131, the two second longitudinal beams 16, and the four connection plates 18 jointly form a second supporting surface 10a. The vehicle further includes a sealing member 7, and the sealing member 7 is clamped between the second supporting surface 10a and the lower vehicle body 2.

The second supporting surface 10a can stably abut against the sealing member 7 to improve air tightness and water tightness of the passenger compartment S.

In some embodiments, the sealing member 7 is clamped between the first supporting surface 20a and the second supporting surface 10a.

The first supporting surface 20a is annular, and the second supporting surface 10a is annular. The first supporting surface 20a and the second supporting surface 10a clamp the annular sealing member 7 to seal the passenger compartment S.

In some embodiments, the second longitudinal beam 16 may be a sill beam of the upper vehicle body 1.

In some embodiments, the cover plate 25 is integrated into the lower vehicle body 2, and the upper vehicle body 1 is hollowed out.

In some embodiments, the cowl panel assembly 14 includes a fourth transverse beam 141 and two connection plates 18 connected to two ends of the fourth transverse beam 141, and the rear floor assembly 13 includes a sixth transverse beam 131 and two other connection plates 18 connected to two ends of the sixth transverse beam 131.

For example, the two connection plates 18 connected to the fourth transverse beam 141 may be hinge inner plates. The hinge inner plates can provide mounting points for a front door hinge, an IP instrument panel, and the like.

For example, the two connection plates 18 connected to the sixth transverse beam 131 may be rear longitudinal beam upper cover plates. The rear longitudinal beam upper cover plate can connect the second longitudinal beam to a wheel housing plate.

FIG. 10 is a schematic partial cross-sectional view of a vehicle according to some embodiments of this application.

As shown in FIG. 10, in some embodiments, the upper vehicle body 1 includes a forearm beam assembly 12, and the lower vehicle body 2 includes a shock tower 295. The forearm beam assembly 12 is detachably connected to the shock tower 295 through a connector 3.

The connector 3 connects the forearm beam assembly 12 to the shock tower 295 to improve strength and stability of connection between the upper vehicle body 1 and the lower vehicle body 2.

For example, the shock tower 295 is a metal mechanical part mounted on a vehicle shock absorber, and a shock absorber and a shock absorbing spring of a suspension system may be mounted on the shock tower 295.

In some embodiments, the forearm beam assembly 12 is detachably connected to the shock tower 295 through a plurality of connectors 3. A joint between the forearm beam assembly 12 and the shock tower 295 is on a force transmission path, and the plurality of connectors 3 can improve stability of connection between the forearm beam assembly 12 and the shock tower 295.

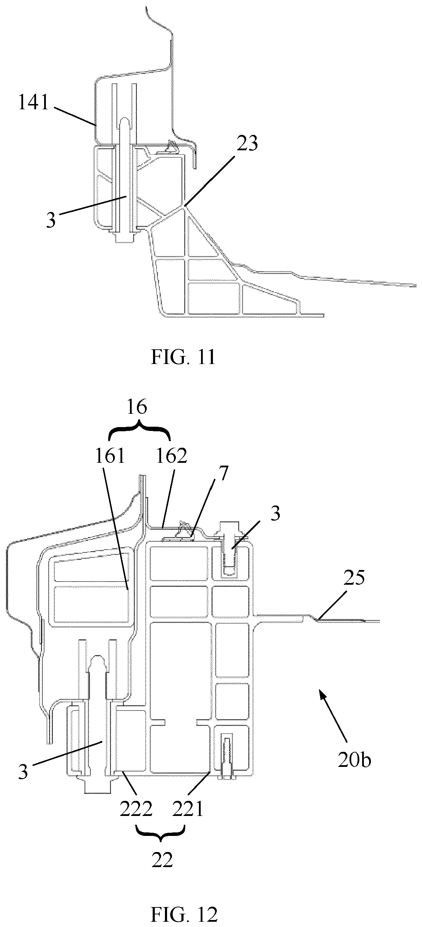

FIG. 11 is another schematic partial cross-sectional view of a vehicle according to some embodiments of this application.

As shown in FIG. 11, in some embodiments, the frame 20 includes a first transverse beam 23, the upper vehicle body 1 includes a cowl panel assembly 14, and the cowl panel assembly 14 includes a fourth transverse beam 141. The first transverse beam 23 is detachably connected to the fourth transverse beam 141 through a connector 3.

The connector 3 connects the first transverse beam 23 to the fourth transverse beam 141 to improve strength and stability of connection between the upper vehicle body 1 and the lower vehicle body 2.

FIG. 12 is still another schematic partial cross-sectional view of a vehicle according to some embodiments of this application.

As shown in FIG. 12, the frame includes a first longitudinal beam 22, the upper vehicle body 1 includes a second longitudinal beam 16, and the first longitudinal beam 22 is detachably connected to the second longitudinal beam 16 through a connector 3.

The connector 3 connects the first longitudinal beam 22 to the second longitudinal beam 16 to improve strength and stability of connection between the upper vehicle body 1 and the lower vehicle body 2.

In some embodiments, the first longitudinal beam 22 includes a first body 221 and a first connection portion 222, where the first connection portion 222 is located on an outer side of the first body 221, and an upper end of the first body 221 is higher than the first connection portion 222 in the height direction Z of the vehicle. The second longitudinal beam 16 includes a second body 161 and a second connection portion 162, where the second connection portion 162 is located on an inner side of the second body 161, the second body 161 is located on an upper side of the first connection portion 222, and the second connection portion 162 is located on an upper side of the first body 221. The second body 161 is detachably connected to the first connection portion 222, and the second connection portion 162 is detachably connected to the first body 221.

The first longitudinal beam 22 and the second longitudinal beam 16 are connected at positions with different heights to improve strength of connection between the first longitudinal beam 22 and the second longitudinal beam 16 and reduce a risk of relative displacement between the first longitudinal beam 22 and the second longitudinal beam 16. The first longitudinal beam 22 and the second longitudinal beam 16 overlap along the width direction Y to implement mutual position limiting and reduce relative displacement between the first longitudinal beam 22 and the second longitudinal beam 16 along the width direction.

In some embodiments, the second body 161 vertically abuts against the first connection portion 222. An abutting surface between the second body 161 and the first connection portion 222 can seal the passenger compartment to some extent.

In some embodiments, a part of the sealing member 7 is clamped between the second connection portion 162 and the first body 221.

For example, the second body 161 and the first connection portion 222 form a connection interface between the first longitudinal beam 22 and the second longitudinal beam 16. In other words, the connector 3 connecting the second body 161 to the first connection portion 222 needs to have a large size and high strength to improve stability of connection between the first longitudinal beam 22 and the second longitudinal beam 16.

The second connection portion 162 and the first body 221 form a sealing interface between the first longitudinal beam 22 and the second longitudinal beam 16. The second connection portion 162 is connected to the first body 221 mainly to compress the sealing member. Therefore, in the vehicle, the connection between the second connection portion 162 and the first body 221 has low strength, and the connector 3 connecting the second connection portion 162 to the first body 221 needs to have a large size and high strength.

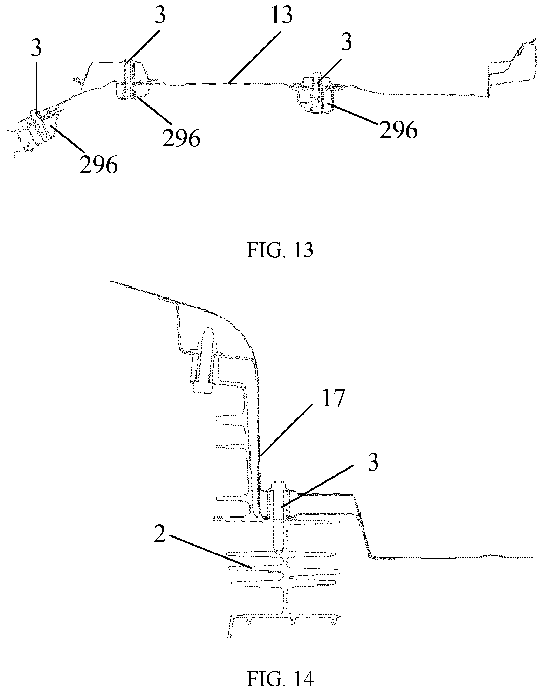

FIG. 13 is yet another schematic partial cross-sectional view of a vehicle according to some embodiments of this application.

As shown in FIG. 13, in some embodiments, the upper vehicle body 1 includes a rear floor assembly 13. The lower vehicle body 2 includes a fifth transverse beam 296, and the fifth transverse beam 296 is detachably connected to the rear floor assembly 13 through a connector 3.

The connector 3 connects the fifth transverse beam 296 to the rear floor assembly 13 to improve strength and stability of connection between the upper vehicle body 1 and the lower vehicle body 2.

In some embodiments, the fifth transverse beam 296 may be provided in plurality.

In some embodiments, the fifth transverse beam 296 is connected to the rear longitudinal beam assembly.

FIG. 14 is still yet another schematic partial cross-sectional view of a vehicle according to some embodiments of this application.

As shown in FIG. 14, in some embodiments, the upper vehicle body 1 includes a rear wheel housing 17, and the rear wheel housing 17 is detachably connected to the lower vehicle body 2 through a connector 3.

As shown in FIG. 10 to FIG. 14, in the embodiments of this application, connectors 3 are disposed at a plurality of positions that are likely to bear a force, to improve strength and stability of connection between the upper vehicle body 1 and the lower vehicle body 2.

As shown in FIG. 1 to FIG. 9, an embodiment of this application provides a vehicle, including an upper vehicle body 1, a lower vehicle body 2, a plurality of connectors 3, a sealing member 7, and a battery cell 8. The upper vehicle body 1 is detachably connected to the lower vehicle body 2 through the plurality of connectors 3. The sealing member 7 is clamped between the upper vehicle body 1 and the lower vehicle body 2. The battery cell 8 is connected to the lower vehicle body 2.

The lower vehicle body 2 includes two first longitudinal beams 22, two first transverse beams 23, and four torque box assemblies 24. Each first transverse beam 23 is connected to the two first longitudinal beams 22 through two of the torque box assemblies 24 respectively. The upper vehicle body 1 includes a rear floor assembly 13, a cowl panel assembly 14, and two second longitudinal beams 16, and each second longitudinal beam 16 is connected to the rear floor assembly 13 and the cowl panel assembly 14. The two first longitudinal beams 22 are detachably connected to the two second longitudinal beams 16 through connectors 3.

The first transverse beam 23 is detachably connected to the upper vehicle body 1 through at least one connector 3. Each torque box assembly 24 is detachably connected to the upper vehicle body 1 through at least one connector 3.

The two first transverse beams 23, the two first longitudinal beams 22, and the four torque box assemblies 24 jointly form a first supporting surface 20a. The rear floor assembly 13, the cowl panel assembly 14, and the two second longitudinal beams 16 jointly form a second supporting surface 10a. The sealing member 7 is clamped between the first supporting surface 20a and the second supporting surface 10a.

The lower vehicle body 2 further includes a cover plate 25 and at least two second transverse beams 26, and each second transverse beam 26 is connected to the two first longitudinal beams 22. The first longitudinal beam 22 and the second transverse beam 26 protrude from a lower surface of the cover plate 25. The at least two second transverse beams 26, the two first longitudinal beams 22, and the cover plate 25 enclose an accommodation compartment 27 with an opening, where the opening faces the cover plate 25. A plurality of battery cells 8 are accommodated in the accommodation compartment 27 and are connected to the cover plate 25. The vehicle further includes a protection plate 5, and the protection plate 5 is connected to the first longitudinal beam 22 and covers the opening.

It should be noted that the embodiments of this application and the features in the embodiments may be combined with each other in the case of no conflict.

In conclusion, it should be noted that the foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions in the embodiments of this application.

## Claims

1. A chassis of a vehicle, comprising:
a lower vehicle body, comprising a frame, wherein the frame has an accommodation cavity; and
a plurality of battery cells, disposed in the accommodation cavity and connected to the frame.

2. The chassis according to claim 1, wherein the frame comprises a first longitudinal beam and a first transverse beam, the first longitudinal beam extends along a length direction of the vehicle, the first transverse beam extends along a width direction of the vehicle, and the first longitudinal beam is connected to the first transverse beam.

3. The chassis according to claim 2, wherein the first longitudinal beam is a sill beam of the lower vehicle body.

4. The chassis according to claim 2 or 3, wherein the chassis further comprises a cover plate, and the cover plate is located on an upper side of the plurality of battery cells and is connected to the first longitudinal beam and the first transverse beam.

5. The chassis according to claim 4, wherein the cover plate serves as a floor of a passenger compartment of the vehicle.

6. The chassis according to claim 4 or 5, wherein the plurality of battery cells are connected to the cover plate.

7. The chassis according to claim 6, wherein the plurality of battery cells are bonded to the cover plate.

8. The chassis according to any one of claims 4 to 7, wherein the chassis further comprises a third transverse beam, and the third transverse beam is disposed on an upper side of the cover plate and is connected to the first longitudinal beam.

9. The chassis according to claim 8, wherein the third transverse beam is configured to mount a seat of the vehicle.

10. The chassis according to claim 8 or 9, wherein the third transverse beam is welded to the cover plate.

11. The chassis according to any one of claims 2 to 10, wherein the frame comprises two first longitudinal beams and two first transverse beams, the two first longitudinal beams are respectively located on two sides of the plurality of battery cells along the width direction, the two first transverse beams are respectively located on two sides of the plurality of battery cells along the length direction, and each first transverse beam is connected to the two first longitudinal beams.

12. The chassis according to claim 11, wherein the frame further comprises four torque box assemblies, and each first transverse beam is connected to the two first longitudinal beams through two of the torque box assemblies respectively.

13. The chassis according to any one of claims 2 to 12, wherein the frame further comprises a second transverse beam disposed in the accommodation cavity, the second transverse beam and the first transverse beam are spaced apart from each other along the length direction, and the second transverse beam is connected to the first longitudinal beam.

14. The chassis according to claim 13, wherein the second transverse beam is provided in plurality, the plurality of second transverse beams are spaced apart from each other along the length direction, and the battery cells are arranged between adjacent second transverse beams.

15. The chassis according to any one of claims 2 to 14, wherein the frame further comprises a protection plate, and the protection plate is located below the plurality of battery cells and covers the accommodation cavity from below; and
the protection plate is fixedly connected to the first longitudinal beam and the first transverse beam, or the protection plate is detachably connected to the first transverse beam and the first longitudinal beam.

16. The chassis according to any one of claims 1 to 15, further comprising a front longitudinal beam assembly and a front anti-collision beam, wherein the front longitudinal beam assembly is fixedly connected to the frame or detachably connected to the frame, and the front anti-collision beam is fixedly connected to the front longitudinal beam assembly or detachably connected to the front longitudinal beam assembly.

17. The chassis according to any one of claims 1 to 16, further comprising a rear longitudinal beam assembly and a rear anti-collision beam, wherein the rear longitudinal beam assembly is fixedly connected to the frame or detachably connected to the frame, and the rear anti-collision beam is fixedly connected to the rear longitudinal beam assembly or detachably connected to the rear longitudinal beam assembly.

18. A vehicle, comprising:
an upper vehicle body; and
the chassis according to any one of claims 1 to 17, wherein the frame is detachably connected to the upper vehicle body.

19. The chassis according to claim 18, wherein the lower vehicle body is configured to be connected to the upper vehicle body after the battery cells are mounted to the frame.

20. The vehicle according to claim 18 or 19, further comprising a connector, wherein the frame is detachably connected to the upper vehicle body through the connector.

21. The vehicle according to claim 20, wherein the connector comprises a bolt.

22. The vehicle according to claim 21, wherein one of the upper vehicle body and the frame is provided with at least a through hole, and the other is provided with at least a threaded hole; and
the bolt passes through the through hole and is in threaded connection to a hole wall of the threaded hole.

23. The vehicle according to claim 21 or 22, wherein the bolt extends along a height direction of the vehicle.

24. The vehicle according to any one of claims 18 to 23, wherein the upper vehicle body comprises a forearm beam assembly, the lower vehicle body comprises a shock tower, and the forearm beam assembly is detachably connected to the shock tower through a connector.

25. The vehicle according to any one of claims 18 to 24, wherein the frame comprises a first transverse beam, the upper vehicle body comprises a cowl panel assembly, and the cowl panel assembly comprises a fourth transverse beam; and
the first transverse beam is detachably connected to the fourth transverse beam through a connector.

26. The vehicle according to any one of claims 18 to 25, wherein the frame comprises a first longitudinal beam, the upper vehicle body comprises a second longitudinal beam, and the first longitudinal beam is detachably connected to the second longitudinal beam through a connector.

27. The vehicle according to claim 26, wherein
the first longitudinal beam comprises a first body and a first connection portion, wherein the first connection portion is located on an outer side of the first body, and an upper end of the first body is higher than the first connection portion in the height direction of the vehicle;
the second longitudinal beam comprises a second body and a second connection portion, wherein the second connection portion is located on an inner side of the second body, the second body is located on an upper side of the first connection portion, and the second connection portion is located on an upper side of the first body; and
the second body is detachably connected to the first connection portion, and the second connection portion is detachably connected to the first body.

28. The vehicle according to claim 27, further comprising a sealing member, wherein a part of the sealing member is clamped between the second connection portion and the first body.

29. The vehicle according to any one of claims 18 to 28, wherein the upper vehicle body comprises a rear floor assembly, the lower vehicle body comprises a fifth transverse beam, and the fifth transverse beam is detachably connected to the rear floor assembly through a connector.

30. The vehicle according to any one of claims 18 to 23, further comprising a sealing member, wherein the sealing member is clamped between the upper vehicle body and the frame.

31. The vehicle according to claim 30, wherein the sealing member surrounds a passenger compartment of the vehicle.

32. The vehicle according to claim 30 or 31, wherein the frame comprises two first longitudinal beams, two first transverse beams, and four torque box assemblies, and each first transverse beam is connected to the two first longitudinal beams through two of the torque box assemblies respectively;
the two first transverse beams, the two first longitudinal beams, and the four torque box assemblies jointly form a first supporting surface;
the upper vehicle body comprises a fourth transverse beam, a sixth transverse beam, two second longitudinal beams, and four connection plates, and each second longitudinal beam is connected to the fourth transverse beam and the sixth transverse beam through two of the connection plates respectively;
the fourth transverse beam, the sixth transverse beam, the two second longitudinal beams, and the four connection plates jointly form a second supporting surface; and
the sealing member is clamped between the first supporting surface and the second supporting surface.
